# EUROPÄISCHE PATENTSCHRIFT

(11) **EP 2 924 331 B1**
(45) Veröffentlichungstag und Bekanntmachung des Hinweises auf die Patenterteilung: **02.01.2019**
(21) Anmeldenummer: 15160390.9
(22) Anmeldetag: 23.03.2015
(51) Int. Cl.: F16M 11/08, F16M 11/20, F16M 13/00

(54) **Drehbare und arretierbare Ablageeinrichtung für einen Gegenstand**
ROTATABLE AND LOCKABLE STORAGE ARRANGEMENT FOR AN OBJECT
DISPOSITIF DE RANGEMENT ROTATIF ET POUVANT ÊTRE BLOQUÉ POUR UN OBJET

(30) Priorität: 25.03.2014 DE 102014104126
(43) Veröffentlichungstag der Anmeldung: 30.09.2015
(73) Patentinhaber: "DURABLE" HUNKE & JOCHHEIM GMBH & CO. KOMMANDITGESELLSCHAFT, 58636 Iserlohn (DE)
(72) Erfinder: Maier-Hunke, Horst-Werner, 58640 Iserlohn (DE)
(74) Vertreter: Beckord & Niedlich Patentanwälte PartG mbB

(56) Entgegenhaltungen:
- WO-A1-2014/023528
- DE-A1- 2 032 798
- DE-B- 1 259 735
- DE-B1- 1 511 387
- US-A- 3 137 276

## Beschreibung

Die Erfindung betrifft eine Ablageeinrichtung, insbesondere für einen Tablet-Computer.

Moderne portable Datenverarbeitungseinrichtungen, insbesondere "Handheld"-Geräte wie zum Beispiel Tablet-Computer oder Smartphones, werden inzwischen mehr und mehr für Aktionen bzw. Arbeiten genutzt, in denen sie nicht in der Hand gehalten sondern auf einem Tisch oder dergleichen abgelegt werden. In einer flachen, horizontalen Lage des Geräts hat der Bediener aber nicht den optimalen Blickwinkel auf den Bildschirm. Daher gibt es inzwischen in der Praxis eine Vielzahl von Ablageeinrichtungen bzw. Halterungen, auf denen das Gerät in einem besseren Winkel zur Tischoberfläche abgelegt bzw. gehalten werden kann. Allerdings ist es bei Präsentationen und beim Informationsaustausch mit anderen Personen, wenn zum Beispiel mehrere Personen um einen Tisch herum sitzen und zusammen ein Gerät nutzen und beispielsweise abwechselnd entweder auf den Bildschirm schauen wollen oder auch das Gerät bedienen wollen, nachteilig, wenn der Tablet-Computer in einer Richtung fixiert ist. Sinnvoller wäre in diesem Zusammenhang eine Halterung, die zwar einerseits dem Gerät festen Halt bietet, aber andererseits auch drehbar ist, um sich an verschiedenen Positionen befindenden Personen die Bedienung des Geräts zu erleichtern.

Solche modernen portablen Datenverarbeitungseinrichtungen mit Touch-Screens weisen in der Regel Bedienfunktionen und Bedienelemente auf, bei deren Ausführung bzw. Betätigung auf die portable Datenverarbeitungseinrichtung eine Kraft ausgeübt wird. Beispielsweise besitzen moderne Tablet-Computer Touchscreen-Funktionen, bei denen der Benutzer zum Beispiel eine Wischbewegung über den Bildschirm ausführt, um damit Objekte auf der Bildschirmoberfläche des Tablet-Computers zu verschieben oder auf der Oberfläche zu scrollen. Wenn das Gerät auf einer drehbaren Ablage abgelegt ist, kann eine solche Bewegung über den Bildschirm zu einer ungewollten Drehung führen, so dass eine präzise Bedienung bzw. Nutzung des Geräts erschwert ist.

In WO2014/023528 wird eine Haltevorrichtung für einen Tablet-Computer gemäß dem Oberbegriff des Anspruchs 1 beschrieben.

Die Haltevorrichtung besitzt ein Unterteil, welches auf eine Tischplatte aufgestellt werden kann und ein bezüglich des Unterteils um eine vertikale Achse drehbares Oberteil. Das Oberteil umfasst eine Auflagefläche für einen Tablet-Computer. Das Oberteil kann mit Hilfe von Permanentmagneten in einer Drehstellung festgehalten werden. Allerdings stellen die Permanentmagneten bei dem Verstellen einer Drehposition des Oberteils einen zu überwindenden Widerstand dar, so dass für die Einstellung einer Drehposition eine gewisse Kraft aufgewandt werden muss. Zudem kann eine unerwünschte Verstellung der eingestellten Drehposition durch eine versehentliche Krafteinwirkung auf das Oberteil erfolgen, falls diese Kraft die Magnetkraft der Permanentmagneten übertrifft.

Es ist also eine Aufgabe der vorliegenden Erfindung, eine bedienungsfreundlichere, komfortablere und effektivere Ablageeinrichtung, insbesondere für moderne portable Datenverarbeitungssysteme wie einen Tablet-Computer, bereitzustellen.

Diese Aufgabe wird durch eine Ablageeinrichtung gemäß Patentanspruch 1 gelöst.

Die erfindungsgemäße Ablageeinrichtung für einen Gegenstand, insbesondere für einen Tablet-Computer, weist eine Basiseinheit mit einer Abstellfläche auf. Weiterhin weist die Ablageeinrichtung einen an der Basiseinheit um eine quer, vorzugsweise im Wesentlichen senkrecht, zur Abstellfläche der Basiseinheit verlaufende Drehachse drehbar gelagerten Träger mit zumindest einer Ablage zum Ablegen des Gegenstands auf. Die Abstellfläche kann beispielsweise die Fläche sein, auf der die Ablageeinrichtung bzw. die Basiseinheit der Ablageeinrichtung im Betrieb abgestellt wird. Die Abstellfläche kann zum Beispiel auch durch Füße gebildet werden. Der Träger ist als drehbares Element vorzugsweise zumindest abschnittsweise zylinderförmig. Die Ablage kann vorzugsweise zum Ablegen des Gegenstands unter einem Winkel zur Abstellfläche ausgebildet sein. Bevorzugt lässt sich der Gegenstand unter unterschiedlichen Winkeln zur Abstellfläche auf der Ablageeinrichtung ablegen bzw. halten, was dadurch realisierbar ist, dass die Ablageeinrichtung eine oder mehrere verstellbare Ablagen und/oder Ablagen aufweist, die zwar nicht variierbar sind, aber auf die der Gegenstand unter verschiedenen Ablagewinkeln abstellbar bzw. ablegbar ist und sicher gehalten wird. Zudem weist die Ablageeinrichtung eine Arretiereinrichtung mit einem Arretierelement zum Arretieren des Trägers an der Basiseinheit in zumindest einer, vorzugsweise mehreren, Drehstellungen auf. Bei der Arretierung wird das Arretierelement in einen Einrastzustand versetzt. Schließlich umfasst die Ablageeinrichtung ein Betätigungselement zum direkten oder indirekten (d. h. zum Beispiel über eine Bewegungsmechanik) Betätigen des Arretierelements.

In einer besonders gut realisierbaren Ausgestaltung ist ein auf einer scheibenartigen Basiseinheit drehbar gelagerter Träger bezüglich der Basiseinheit um eine Zentralachse drehbar.

Die Ablageeinrichtung bzw. der Träger der Ablageeinrichtung kann zum Beispiel bei mehreren Personen, die gemeinsam den Gegenstand, beispielsweise einen Tablet-Computer, verwenden wollen, jeweils in Richtung der Person gedreht werden, die gerade das Gerät betätigen will oder etwas darauf ablesen möchte. Andererseits kann die Ablage bzw. der Träger mit dem Arretierelement arretiert werden, wenn das Gerät beispielsweise durch eine Touchscreen-Anwendung betätigt werden soll, bei der es darauf ankommt, dass sich der Tablet-Computer während der Betätigung des Geräts nicht bewegt oder dreht. Dabei wird das Arretierelement zum Arretieren mit Hilfe des Betätigungselements in einen Einrastzustand versetzt. Die Basiseinheit kann zum Beispiel einen Fuß oder eine andere auf einer Auflage oder Unterlage, beispielsweise einem Tisch, postierbare oder montierbare Vorrichtung umfassen, welche ausreichend reibschlüssig oder kraftschlüssig oder haftschlüssig mit der Unterlage verbunden ist, um gegen ein Verrutschen geschützt zu sein. Die beispielsweise bei der Betätigung von Tablet-Computern ausgeübte Kraft in Lateralrichtung kann mit der Arretierung aufgefangen werden, so dass es im eingerasteten Zustand der Ablageeinrichtung bei einer Bedienung beispielsweise durch eine Wischbewegung nicht zu einer unerwünschten, die Bedienungsfreundlichkeit und Effizienz des Tablet-Computers vermindernden Bewegung des Tablet-Computers kommt.

Weitere, besonders vorteilhafte Ausgestaltungen und Weiterbildungen der Erfindung ergeben sich aus den abhängigen Ansprüchen sowie der nachfolgenden Beschreibung, wobei insbesondere auch Merkmale verschiedener Ausführungsbeispiele zu neuen Ausführungsbeispielen kombiniert werden können.

Gemäß einer besonders praktikablen Ausgestaltung der erfindungsgemäßen Ablageeinrichtung umfasst das Betätigungselement eine Drucktaste. Dabei ist die Arretiereinrichtung vorzugsweise so ausgebildet, dass das Arretierelement, wenn es sich in einer Freigabestellung (in der eine freie Drehung des Trägers möglich ist) befindet, bei einer Betätigung der Drucktaste in eine Arretierstellung (in der der Träger an der Basis so arretiert ist, dass keine freie Drehung möglich ist) gebracht wird und das Arretierelement, wenn es sich in einer Arretierstellung befindet, bei einer Betätigung der Drucktaste in eine Freigabestellung gebracht wird. Durch mehrfaches Drücken der Drucktaste kann die Arretiereinrichtung also bevorzugt immer zwischen der Arretierstellung und der Freigabestellung hin- und hergestellt werden.

Bevorzugt kann die Basiseinheit eine Mehrzahl von Rastaussparungen, auch Rastpfannen genannt, aufweisen, die entlang eines Umfangs, beispielsweise auf einem Teilkreis, um die Drehachse angeordnet sind. Die Richtung, in die ein Arretierelement in die Rastaussparungen eingreifen kann bzw. in die sich die Rastaussparungen erstrecken, kann parallel oder quer zur Drehachse verlaufen. Die Rastaussparungen der Basiseinheit weisen bevorzugt eine kreisförmige Grundfläche auf.

Das Arretierelement kann bevorzugt in einer Führung, besonders bevorzugt einem Führungsgehäuse, vorzugsweise federnd, verschiebbar gelagert sein. Vorzugsweise liegt die Verschiebungsrichtung parallel zur Drehachse. Die Führung ist vorzugsweise exzentrisch im drehbar gelagerten Träger bzw. einem Trägergehäuse des Trägers angeordnet, so dass das Arretierelement passend zum Teilkreis mit den Rastaussparungen liegen und in diese eingreifen kann. Die Führung bzw. das Führungsgehäuse weist insbesondere einen kleineren Durchmesser als den des Trägers bzw. des Trägergehäuses auf. Besonders bevorzugt ist das Arretierelement in der Führung federnd gelagert. Beispielsweise kann in der Führung, insbesondere einem bevorzugt zylinderförmigen Führungsgehäuse, ein axial verlaufendes erstes Federelement angeordnet sein.

Die Führung bzw. das Führungsgehäuse ist vorzugsweise exzentrisch im drehbar gelagerten Trägergehäuse angeordnet, passend zum Teilkreis mit den Rastaussparungen.

Gemäß einer besonders praktikablen Variante weist die Führung eine ringförmig um das Arretierelement umlaufende Kulisse auf, welche bevorzugt bezüglich der Führung feststehend ist und zu der relativ das Arretierelement bewegt wird. Diese Kulisse kann, wie nachfolgend erläutert wird, z. B. durch ihre Formgebung die verschiedenen Stellungen des Arretierelements in der Führung, insbesondere die Arretierstellung und die Freigabestellung, vorgeben bzw. definieren. Die Kulisse umfasst hierzu vorzugsweise eine Art "Hüllenverzahnung" an einer zylinderförmigen Innenwand des Führungsgehäuses.

Das Arretierelement kann einen ringförmigen Rastkranz aufweisen, welcher im Eingriff mit der Kulisse der Führung steht. Vorzugsweise verläuft der Rastkranz in einem zur Drucktaste weisenden axialen Endbereich entlang eines Außenumfangs des Arretierelements.

Die Bewegung des Arretierelements kann somit durch die Kulisse der Führung mit gesteuert werden. Zudem dient die Kulisse zum Einrasten des Arretierelements in den verschiedenen Stellungen.

Bevorzugt weist der Rastkranz des Arretierelements entsprechend eine Mehrzahl von Raststegen auf, die z. B. mit der Kulisse in geeigneter Weise zusammenwirken können. Die Raststege sind vorteilhaft an ihrer der Drucktaste zugewandten Stirnseite in Umfangsrichtung abgeschrägt und greifen in einer Freigabestellung des Arretierelements in passend positionierte Nuten in der Kulisse ein. Durch die Abschrägung ist ein Einrasten in die Rastzähne bzw. die Hüllenverzahnung der Kulisse gewährleistet.

In einer besonders vorteilhaften Variante weist die Drucktaste an einer zum Arretierelement weisenden Seite, im folgenden "Unterseite" genannt, einen ringförmig umlaufenden Steuerkranz auf, welcher mit dem Rastkranz des Arretierelements derart im Eingriff steht, dass bei einer Betätigung der Drucktaste das Arretierelement entlang einer Längsachse des Arretierelements verschoben und um die Längsachse gedreht wird. Der Steuerkranz bildet eine Art zylinderförmiges vorspringendes Steuerelement. Dabei ist der Steuerkranz der Drucktaste bevorzugt sägezahnförmig, d. h. mit sägezahnförmigen Kontaktflächen ausgebildet.

In einer besonders bevorzugten Ausgestaltung der erfindungsgemäßen Ablageeinrichtung sind dabei die Raststege des Arretierelements in einer Radialrichtung derart dimensioniert, dass sie sowohl mit dem Steuerkranz der Drucktaste als auch der Kulisse im Eingriff stehen. Anders ausgedrückt, dienen die Raststege also dem Zusammenwirken des Arretierelements sowohl mit der Drucktaste als auch mit der Kulisse der Führung. Das Arretierelement kann so z. B. über den Steuerkranz der Drucktaste von einer Position in der Kulisse zur nächsten bewegt werden, um so von einer Arretierstellung in eine Freigabestellung und dann wieder in die Arretierstellung usw. zu gelangen.

Vorteilhaft kann die Ablageeinrichtung eine Gegenlagerscheibe, auch Führungsdeckel genannt, an einem der Drucktaste gegenüberliegenden Ende der Führung bzw. des Führungsgehäuses aufweisen, an dem das Arretierelement vorzugsweise federbelastet gegengelagert ist.

Das Arretierelement kann einen Raststift umfassen. Dabei kann vorzugsweise der oben beschriebene Rastkranz direkt an dem Raststift angeordnet sein.

Bei einer anderen bevorzugten zweiten Variante ist das Arretierelement zweiteilig ausgebildet. Vorzugsweise kann dabei der Rastkranz an einem Drehnocken des Arretierelements angeordnet sein, wobei in diesem Fall z. B. ein Raststift beweglich entlang der Rastachse, am oder im Drehnocken, vorzugsweise gefedert, gelagert ist. Damit der Raststift relativ zu dem Drehnocken in Axialrichtung verschiebbar ist, kann der Drehnocken an seinem Innenumfang vorzugsweise eine Nut und der Raststift an seinem dem Drehnocken zugewandten Ende einen mit der Nut korrespondierenden Vorsprung aufweisen, welcher bei einer Aufwärtsbewegung des Drehnockens mit der am Innenumfang des Drehnockens befindlichen Nut in Axialrichtung formschlüssig in Eingriff kommt, so dass bei einer weiteren Aufwärtsbewegung des Drehnockens der Raststift die Aufwärtsbewegung mitvollzieht. Die Vorsprünge verlaufen beispielsweise als Stege in Achsrichtung und bilden z. B. in den Nuten des Drehnockens eine schwalbenschwanzähnliche Verbindung.

Der Drehnocken und der Raststift können dabei also als zwei von einander getrennte Elemente des Arretierelements ausgebildet sein, wobei der Drehnocken eine in Axialrichtung verlaufende, an seiner Innenwand ausgebildete, in Axialrichtung verlaufende Führung aufweisen kann und der Raststift an seinem einen Ende im Eingriff mit der in Axialrichtung verlaufenden inneren Führung des Drehnockens steht, derart, dass der Raststift nur in Axialrichtung bezüglich des Drehnockens verschiebbar ist.

Für die federnde Lagerung kann ein erstes Federelement derart in der Führung, vorzugsweise zwischen einer Feder-Lagerkante in Form einer Auskragung und dem Führungsdeckel, angeordnet sein, dass es auf das Arretierelement, also z. B. den Drehnocken und/oder den Raststift, eine Axialkraft ausübt, die der durch die Drucktaste ausgeübten Axialkraft entgegengesetzt wirkt.

Weiterhin können in einer bevorzugten Variante die Rastaussparungen so ausgebildet und die Arretiereinrichtung so angeordnet und ausgebildet sein, dass das Arretierelement von der Arretierstellung aus in einer von der Drucktaste weg weisenden Richtung in eine Zwischenstellung verfahrbar ist. Anders gesagt, sind die Rastaussparungen bevorzugt ausreichend tief ausgebildet, um der Bewegung des Raststifts bzw. des Arretierelements ausreichend Raum zu geben, so dass das Arretierelement, insbesondere der Raststift, aus der Arretierstellung noch ein kurzes Stück von der Drucktaste weg in die Rastaussparung gedrückt werden kann, so dass der Rastkranz des Arretierelements eine weitere Position in der Kulisse erreichen kann, welche wieder eine Freigabestellung des Arretierelements definiert. Alternativ sind die Rastaussparungen in einer Scheibe mit einem Abstand zum Boden ausgebildet, so dass ebenfalls ausreichend Freiraum für die Bewegung des Arretierelements aus der Arretierstellung verbleibt.

Bei der Ausgestaltung mit einem Drehnocken kann die erfindungsgemäße Ablageeinrichtung ein zweites Federelement aufweisen, dessen eines Ende in Kontakt mit dem Raststift steht und dessen anderes Ende in Kontakt mit dem Drehnocken steht, derart, dass über das zweite Federelement bei einer Bewegung des Drehnockens durch die Drucktaste eine Kraft auf den Raststift in Bewegungsrichtung des Drehnockens ausgeübt wird. Der Raststift weist hierzu als Federsitz für das zweite Federelement eine Art Lagerkante für die in Axialrichtung des Raststifts angeordnete Feder in Form einer Auskragung (bzw. in einem Teilabschnitt seiner Längsachse einen Vorsprung in Radialrichtung) auf, der mit dem einen Ende des zweiten Federelements in Kontakt steht. Die Auskragung bzw. der Vorsprung des Raststifts kann bevorzugt in Radialrichtung achsensymmetrisch ausgebildet sein. Der Drehnocken kann beispielsweise an seinem dem scheibenförmigen Basiselement zugewandten Ende eine kreisförmig ausgebildete Nut mit einer Vertiefung in Achsenrichtung aufweisen, in der das andere Ende des zweiten Federelements aufgenommen ist. Mit einer solchen Konstruktion kann vorteilhafterweise der Rastkranz des Arretierelements auch dann in eine weitere Position in der Kulisse verfahren werden, wenn sich das Arretierelement in der Arretierstellung befindet und kein zusätzlicher Freiraum zur Verfügung steht, um den Raststift von der Arretierstellung noch tiefer in die Rastaussparung zu drücken, da hierbei einfach der Drehnocken mit dem Rastkranz gegenüber dem Raststift in Richtung der Rastaussparung verschoben und dabei durch den Steuerkranz gedreht werden kann.

Die Federkonstante des ersten Federelements ist bevorzugt größer als die Federkonstante des zweiten Federelements. Anders ausgedrückt, ist also die Feder zwischen Drehnocken und Raststift möglichst weich, aber noch stark genug, damit der Raststift gut einrastet und gehalten wird.

In einer weiteren bevorzugten alternativen Ausgestaltung befindet sich ein zweites Federelement zwischen dem Raststift und der Drucktaste (z. B. kann sich die Feder dabei zumindest teilweise im Inneren einer hohlen Drucktaste erstrecken). Auch in diesem Fall lässt sich die Drucktaste weiter in Richtung des Raststifts drücken, so dass der Drehnocken verschoben wird und der daran befindliche Rastkranz in die nächste Stellung an der Kulisse verfahren wird, auch wenn der Raststift in der Arretierstellung schon am Anschlag in der Rastausnehmung ist. Bei dieser Variante kann die Drucktaste unabhängig davon, ob sich das Arretierelement in der Arretierstellung oder der Freigabestellung befindet, immer in der gleichen Lage angeordnet sein.

Auf den drehbar gelagerten Träger kann bevorzugt eine Abdeckung montiert sein, welche die Ablage umfasst und an der die Drucktaste montiert ist.

In einer bevorzugten Ausgestaltung weist die Ablageeinrichtung als eine Ablage eine zu der Basiseinheit bzw. der Abstellfläche unter einem kleinen Winkel, vorzugsweise zwischen 5° und 30°, geneigte Ablagefläche auf. Dabei ist es sinnvoll, dass die Ablagefläche ein Profil gegen Verrutschen eines darauf abgelegten Gegenstands aufweist.

Zusätzlich oder alternativ kann die Ablageeinrichtung eine Ablage in Form einer, vorzugsweise der Geometrie der Schmalseite eines anzubringenden Gegenstands entsprechenden, Vertiefung aufweisen, welche derart ausgebildet ist, dass darin die Schmalseite des anzubringenden Gegenstands aufgenommen werden kann, so dass der Gegenstand, insbesondere ein flacher Tablet-Computer unter einem relativ steilen Winkel, vorzugsweise zwischen 30° und 90°, zur Basiseinheit bzw. Abstellfläche in die Ablageeinrichtung in der Ablageeinrichtung abgelegt bzw. darin gehalten werden kann.

Zwischen der Basiseinheit und dem bezüglich der Basiseinheit drehbaren Träger können Gleitelemente derart angeordnet sein, dass der Träger relativ zu der Basiseinheit reibungsarm drehbar ist. Alternativ können gegenüberliegende, zusammenwirkende Flächen an bzw. in der Basiseinheit und/oder an bzw. im Träger als Gleitflächen ausgebildet, z. B. poliert, sein.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:
- Figur 1: eine perspektivische Außenansicht einer erfindungsgemäßen Ablageeinrichtung gemäß einem ersten Ausführungsbeispiel,
- Figur 2: einen Längsschnitt durch die Ablageeinrichtung nach Figur 1,
- Figur 3: eine Explosionsansicht der Ablageeinrichtung gemäß den Figuren 1 und 2,
- Figur 4: einen perspektivischen Teilschnitt im Bereich der Arretiereinrichtung einer Ablageeinrichtung gemäß den Figuren 1 bis 3,
- Figur 5: eine Explosionsansicht der Arretiereinrichtung einer Ablageeinrichtung gemäß den Figuren 1 bis 4 mit einem Schnitt durch eine Drucktaste,
- Figur 6: eine perspektivische Darstellung der Drucktaste der Arretiereinrichtung gemäß Figur 5 von unten gesehen,
- Figuren 7a und 7b: schematische Darstellungen von Teilen der Arretiereinrichtung gemäß Figur 5 in einer Freigabestellung (Grundstellung),
- Figuren 8a und 8b: schematische Darstellungen von Teilen der Arretiereinrichtung wie in den Figuren 7a und 7b, jedoch in einem Zustand mit betätigter (heruntergedrückter) Drucktaste,
- Figuren 9a und 9b: schematische Darstellungen der Teile der Arretiereinrichtung wie in den Figuren 7a und 7b, jedoch in einer Arretierstellung,
- Figuren 10a und 10b: schematische Darstellungen der Teile der Arretiereinrichtung wie in den Figuren 7a und 7b zurück einer Freigabestellung,
- Figur 11: einen perspektivischen Teilschnitt im Bereich der Arretiereinrichtung analog zu Figur 4, jedoch nun für eine Ablageeinrichtung gemäß einem zweiten Ausführungsbeispiel mit einer Variante einer Arretiereinrichtung,
- Figur 12: einen Schnitt für eine Ablageeinrichtung gemäß einem dritten Ausführungsbeispiel im Bereich der Arretiereinrichtung zur Darstellung einer weiteren Variante einer Arretiereinrichtung,
- Figur 13: eine Explosionsansicht (wie in Figur 3) eines weiteren Ausführungsbeispiels einer erfindungsgemäßen Ablageeinrichtung.

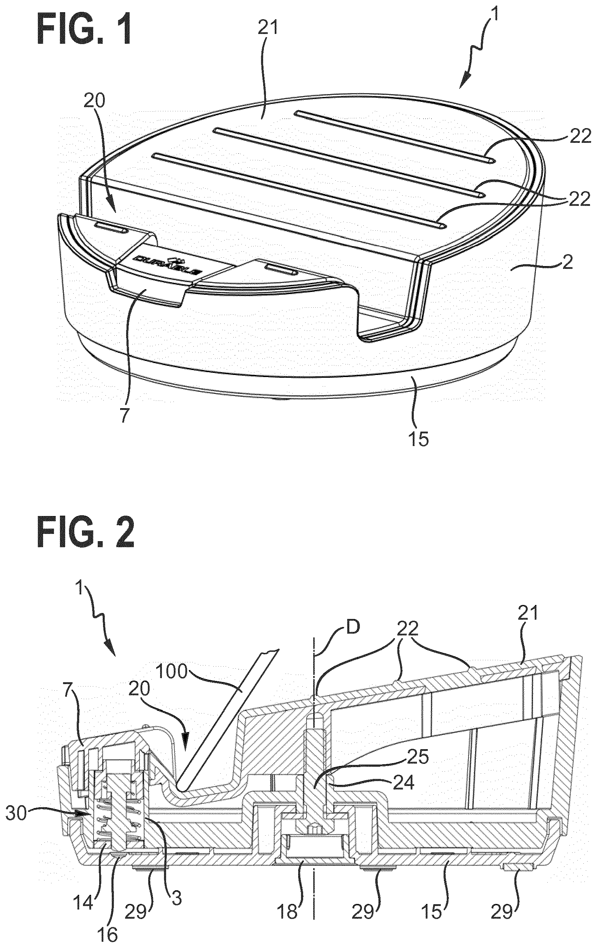

Die Figuren 1 bis 3 zeigen ein bevorzugtes Ausführungsbeispiel der erfindungsgemäßen Ablageeinrichtung 1. Figur 1 zeigt dabei eine perspektivische Ansicht von schräg vorne und in Figur 2 ist ein (parallel zur Drehachse D von einer in Figur 1 vorne gezeigten Vorderseite zu einer in Figur 1 hinten liegenden Rückseite verlaufender) Längsschnitt durch die Ablageeinrichtung 1 gezeigt.

Diese Ablageeinrichtung 1 umfasst eine Basiseinheit 15, welche mit ihrer auf der Unterseite befindlichen Abstellfläche bzw. ihren dort befindlichen Fußelementen 29 auf einem Tisch (nicht dargestellt) oder einer anderen Oberfläche abgestellt werden kann. Mittels einer Drucktaste 7 ist der Träger 2, wie später noch erläutert wird, in verschiedenen Drehstellungen um die Drehachse D relativ zur Basiseinheit 15 arretierbar. An der Basiseinheit 15 ist ein um eine senkrecht zur Abstellfläche der Basiseinheit verlaufende Drehachse D (siehe Figur 2) drehbar gelagerter Träger 2 befestigt, welcher obenseitig eine Ablage 21 zum Ablegen eines Gegenstands, hier eines Tablet-Computers, auf dem Träger 2 aufweist. Die räumlichen Orientierungen oben und unten beziehen sich hierbei auf eine ordnungsgemäße übliche Aufstellung der Ablageeinrichtung 1 im Betrieb, d. h. wenn sie auf die Fußelemente 29 abgestellt ist.

Diese Ablage 21 verläuft bezogen auf die untere Abstellfläche schräg, hier unter einem Winkel von beispielsweise 10° bis 20° zur Abstellfläche. Die Ablage 21 wird hier durch eine auf bzw. in dem im Wesentlichen zylinderförmig ausgebildeten Gehäuse des Trägers 2 angeordnete Abdeckung 21 gebildet, die mit dem Gehäuse des Trägers 2 fest verbunden ist. Die Abdeckung 21 weist ein Profil 22 (bzw. Profilstreifen) auf, um einen darauf abgelegten Tablet-Computer gegen Verrutschen zu sichern.

Der Träger 2 und die Abdeckung 21 sind korrespondierend zueinander so geformt, dass die Ablageeinrichtung 1 auf ihrer Oberseite eine Ausnehmung 20 aufweist, welche eine zweite Ablage bildet, in der beispielsweise ein Tablet-Computer 100 mit einem anderen Winkel (beispielsweise unter einem Winkel von ca. 50° bis 70°) zur Abstellfläche eingestellt werden kann, wie dies in Figur 2 dargestellt ist.

In Figur 2 ist gut zu erkennen, dass der Träger 2 von unten mittels einer zentralen, entlang der Drehachse D durch die Basiseinheit 15 hindurch verlaufenden Schraube 25 montiert ist, so dass der Träger 2 drehbar auf der Basiseinheit 15 gelagert ist. Diese Schraube 25 ist in einem entsprechenden, ein Innengewinde aufweisendem Dom in der Abdeckung 21 verschraubt. Um eine besonders reibungsarme Rotation des Trägers 2 relativ zu der Basiseinheit 15 zu gewährleisten, sind die aufeinander liegenden Flächen des Trägers 2 und der Basiseinheit 15 poliert.

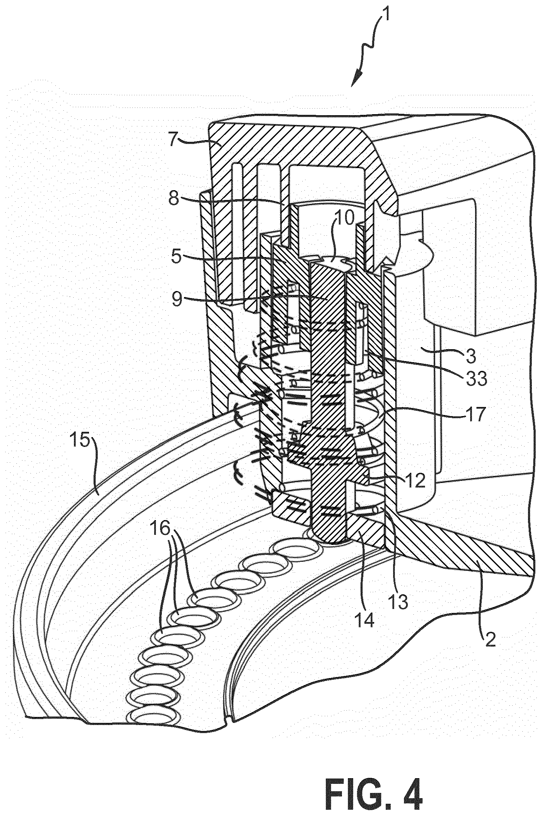

Auf der linken Seite der Figur 2 ist auch ein Schnitt durch die Drucktaste 7 dargestellt, sowie ein Schnitt durch eine unter der Drucktaste 7 in einer Führung 3 bzw. einem Führungsgehäuse 3 (im Folgenden wird ohne Beschränkung der Allgemeinheit der Begriff Führungsgehäuse 3 verwendet) angeordnete Arretiereinrichtung 30, welche durch die Drucktaste 7 betätigt wird. Das Führungsgehäuse 3 hat einen kleineren Durchmesser als der drehbar gelagerte zylinderförmige Träger 2 und ist parallel zur Drehachse D in einem Bereich nahe der Außenkante des Trägers 2 angeordnet. Der Aufbau und die Funktionsweise der Arretiereinrichtung 30 werden später noch anhand der Figuren 4 bis 6 sowie der Figuren 7a bis 10b näher erläutert.

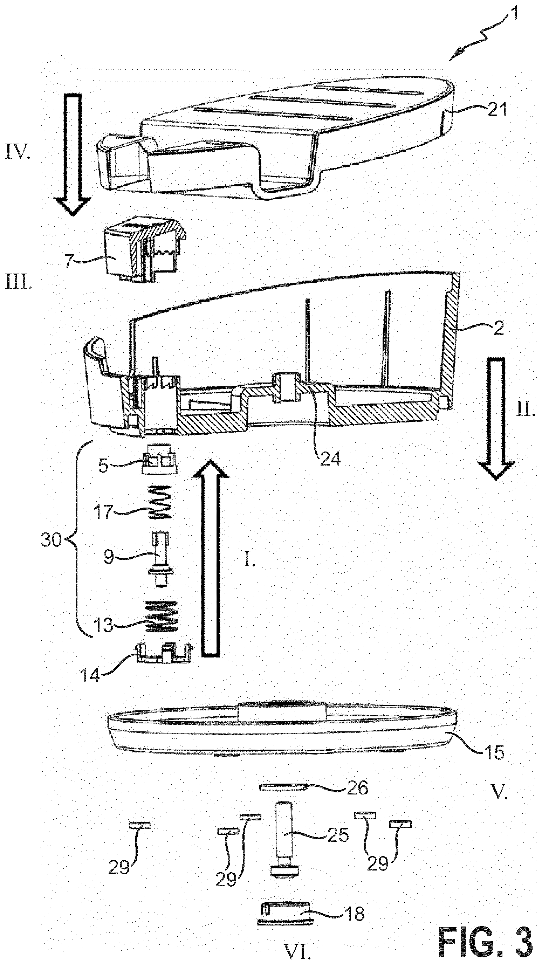

Figur 3 zeigt eine Explosionsansicht der erfindungsgemäßen Ablageeinrichtung 1. Zusätzlich zu den Bezugszeichen sind römische Ziffern I. bis VI. eingefügt, die die Reihenfolge der Montageschritte zum Zusammenbau der Ablageeinrichtung 1 angeben.

Zunächst wird in einem Schritt I. die Arretiereinrichtung 30 mit ihren noch später erläuterten Elementen, wie zum Beispiel einem Drehnocken 5, einem Raststift 9 sowie einer ersten Feder 13 und einer zweiten Feder 17, in dem Führungsgehäuse 3 des Trägers 2 montiert. Dabei werden der Raststift 9 bzw. die erste Feder 13 durch einen Führungsdeckel 14 gegengelagert, der von unten, d. h. der der Basiseinheit 15 zugewandten Seite, in das Führungsgehäuse 3 eingesetzt wird und dieses bis auf eine Öffnung für den unteren Teil des Raststifts 9 verschließt.

In einem nächsten Schritt II. wird der Träger 2 auf der Basiseinheit 15 aufgelegt und nachfolgend im Schritt III. die Drucktaste 7 aufgesteckt. Danach wird im Schritt IV. die Abdeckung 21 als Ablage 21 in den Träger 2 gelegt.

Im Schritt V. wird dann durch ein Loch eines zentralen Lagerelements 24 (Lagerring) des Trägers 2, gesichert durch eine Unterlegscheibe 26, eine Schraube 25 von unten, d. h. von der Außenseite der Basiseinheit 15 in den Dom der Abdeckung 21 eingeschraubt. Auf diese Weise werden gleichzeitig die Abdeckung 21 am Träger 2 und der Träger 2 an der Basiseinheit 15 befestigt, wobei der Träger um die durch die Schraube 25 gebildete Drehachse D drehbar an der Basiseinheit 15 gelagert ist. Nach unten hin wird die Schraube 25 dann in einem Schritt VI. mit einem Stopfen 18 abgedeckt, der von unten in eine entsprechende Öffnung der Basiseinheit 15 für die Schraube 25 eingedrückt wird. Außerdem werden Fußelemente 29, beispielsweise Gummipads oder dergleichen, an der Unterseitseite bzw. Außenseite der Basiseinheit 15 angeordnet, was zu einem beliebigen Zeitpunkt, beispielsweise auch vor dem Schritt I., erfolgen kann.

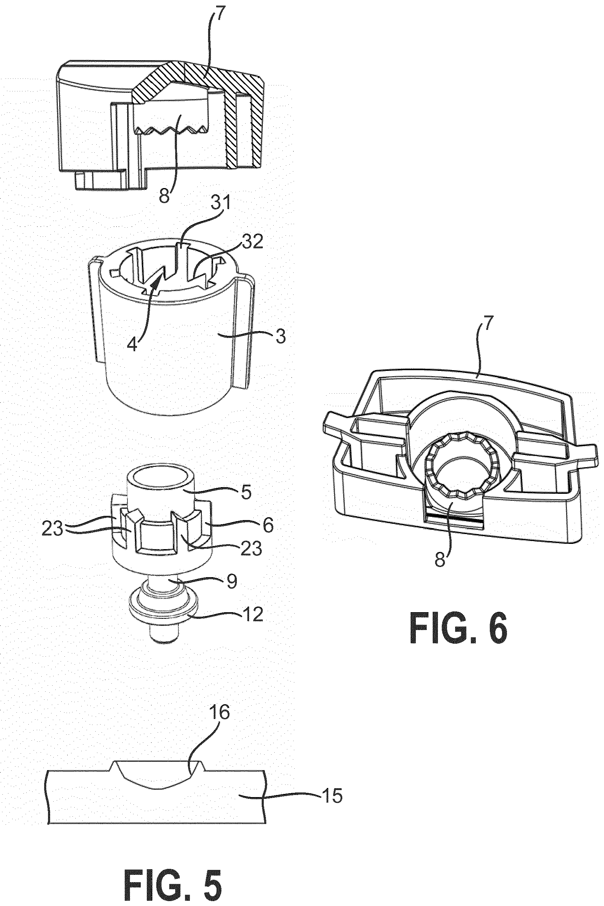

Anhand der Figuren 4 und 5 wird nun der Aufbau der Arretiereinrichtung 30 in dem im Träger 2 angeordneten Führungsgehäuse 3 näher erläutert. Figur 4 zeigt dabei einen vergrößerten Teilschnitt durch die Drucktaste 7 sowie das Führungsgehäuse 3 mit der Arretiereinrichtung 30 und einen Teil der mit der Arretiereinrichtung 30 zusammenwirkenden Rastaussparungen 16 in der Basiseinheit 15. Figur 5 zeigt eine Explosionsdarstellung dieser Elemente.

Die Arretiereinrichtung 30 weist bei dem hier dargestellten Ausführungsbeispiel zwei Arretierelemente 5, 9, nämlich zum einen einen Raststift 9 und zum anderen einen Drehnocken 5 auf. Der Drehnocken 5 sowie der Raststift 9 sind mittels Federn 13, 17 in dem Führungsgehäuse 3 federnd gelagert und über die als Betätigungselement 7 dienende Drucktaste 7 betätigbar, welche oberhalb des Drehnockens 5 angeordnet ist. Die Halterung der gesamten Arretiereinrichtung 30 in dem im Wesentlichen zylinderförmigen Führungsgehäuse 3 erfolgt mittels einer von unten in das Führungsgehäuse 3 eingesetzten Haltescheibe 14, welche auch als Widerlager für eine der Federn 13 dient und daher auch als Gegenlagerscheibe 14 bezeichnet werden kann. Diese Haltescheibe 14 weist eine zentrale Bohrung auf, durch die der Raststift 9 mit seinem unteren Ende durchragt und somit untenseitig geführt ist.

Der Raststift 9 der Arretiereinrichtung 30 verläuft koaxial zur Längsachse des Führungsgehäuses 3 und steht an seinem oberen Ende mit dem Drehnocken 5 in Kontakt bzw. wird obenseitig von diesem geführt. In der dargestellten Ausführungsform steht der Raststift 9 hierzu in Kontakt mit der Innenseite des Drehnockens 5. Der Raststift 9 umfasst dabei an seinem dem Drehnocken 5 zugewandten Ende zwei sich radial gegenüberliegende Vorsprünge 10, mit denen der Raststift 9 mit korrespondierenden Nuten 11 auf der Innenseite des Drehnockens 5 im Eingriff steht. Somit ist der Raststift 9 im Drehnocken 5 in Umfangsrichtung arretiert, so dass keine Drehung des Raststifts 9 relativ zu dem Drehnocken 5 um die gemeinsame Längsachse auftreten kann. Beide Arretierelemente 5, 9 können sich nur zusammen um die gemeinsame Längsachse im Führungsgehäuse 3 drehen. Die Nuten 11 sind in Axialrichtung nicht bis zum unteren Rand des Drehnockens 5, d. h. dem der Basiseinheit 15 zugewandten Rand des Drehnockens 5, ausgebildet, so dass der Raststift 9 auch in Axialrichtung formschlüssig gegen ein Ablösen von dem Drehnocken 5 in Abwärtsrichtung, d. h. in Richtung der Basiseinheit 15, gesichert ist. Der Raststift 9 kann also nur von oben in den Drehnocken 5 eingeschoben werden. Jedoch können sich der Drehnocken 5 und der Raststift 9 relativ zueinander in Axialrichtung bewegen bzw. verschieben.

Der Drehnocken 5 wird von einer ersten Feder 13, die auf der bereits oben erwähnten Gegenlagerscheibe 14 ihren Federsitz hat, in Axialrichtung nach oben gedrückt. Diese erste Feder 13 drückt hierzu von unten an einer äußeren umlaufenden Kante gegen den Drehnocken 5. Da, wie oben erläutert, der Raststift 9 nicht beliebig weit nach unten aus dem Drehnocken 5 herausgeschoben werden kann, wird durch die erste Feder 13 zwangsläufig auch der Raststift 9 im Führungsgehäuse 3 mit nach oben gedrückt.

Weiterhin weist der Raststift 9 einen ringförmigen Vorsprung 12 auf, welcher als Federsitz für eine zweite Feder 17 dient. Die zweite Feder 17 sitzt mit ihrem einen Ende auf dem Federsitz bzw. dem ringförmigen Vorsprung 12 auf. Das andere Ende der Feder 13 wird von einer kreisförmigen Nut 33 des Drehnockens 5 aufgenommen. Dadurch wird dafür gesorgt, dass der Drehnocken 5 ohne eine äußere Kraft immer in der obersten Stellung relativ zum Raststift 9 ist. Wird der Drehnocken 5 in Abwärtsrichtung, also in Richtung der Basiseinheit 15, bewegt, so wird auf die Feder 17 eine mechanische Kraft ausgeübt, welche diese auf den Federsitz 12 überträgt, so dass der Raststift 9 in Abwärtsrichtung mitgenommen wird. Wie bereits erwähnt, ist der Raststift 9 in seinem unteren Endbereich, d. h. an seinem von dem Drehnocken 5 abgewandten Endbereich, in der Haltescheibe 14 gegengelagert.

Der gesamte Träger 2 ist wie erwähnt gleitfähig auf einer Basiseinheit 15 gelagert. Diese Basiseinheit 15 weist auf einem nahe ihrem äußeren Rand in Umfangsrichtung verlaufenden Teilkreis eine Vielzahl von Rastaussparungen 16 auf. Diese Rastaussparungen 16 bzw. Rastpfannen 16 sind zum Beispiel parallel zur Drehachse D ausgebildete kreisförmige Vertiefungen oder Bohrungen. Das Führungsgehäuse 3 mit der Arretiereinrichtung 30 ist so innerhalb des Trägers 2 angeordnet, dass sich der Raststift 9 in jeder Drehstellung über diesem Teilkreis mit den Rastaussparungen 16 befindet. Wird der Raststift 9 in Abwärtsrichtung bewegt, so wird ein Formschluss des Raststifts 9 mit einer der Rastaussparungen 16 des Trägers 2 gebildet, so dass der Träger 2 mit der Abdeckung bzw. Ablage 21 für den Tablet-Computer 100 gegenüber einer Verdrehung um die Drehachse D relativ zur Basiseinheit 15 arretiert ist.

Die Arretierung, aber auch das Lösen der Arretierung, d. h. eine Verstellung des Raststifts 9 von einer Arretierstellung in eine Freigabestellung, wird durch eine Betätigung der Drucktaste 7 ausgelöst.

Das Führungsgehäuse 3 weist bei dem dargestellten Ausführungsbeispiel hierzu an seiner Innenseite eine (feststehende) Kulisse 4 auf, welche auch als eine Art "Hüllenverzahnung" bezeichnet werden kann. Diese Kulisse 4 ist in der Explosionsdarstellung in Figur 5 im Detail gezeigt. Sie weist in Axialrichtung verlaufende Nuten 31 und zwischen den Nuten 31 jeweils zwei Rastzacken 32 auf.

Der Drehnocken 5 der Arretiereinrichtung 30 weist hierzu passend außenseitig einen umlaufenden Rastkranz 6 mit Raststegen 23 auf, wobei der Rastkranz 6 im Eingriff mit der Kulisse bzw. der Hüllenverzahnung 4 des Führungsgehäuses 3 steht.

Um den Drehnocken 5 zu betätigen, weist die Drucktaste 7 innenseitig bzw. untenseitig einen mit dem Rastkranz 6 des Drehnockens 5 in Kontakt stehenden Drucktasten-Rastkranz bzw. Steuerkranz 8 auf. D. h., der Drehnocken bzw. der Rastkranz 6 des Drehnockens 5 steht sowohl mit dem Steuerkranz 8 der Drucktaste 7 als auch mit der Kulisse 4 des Führungsgehäuses 3 im Eingriff. Dabei ist der Steuerkranz 8 der Drucktaste 7 zwischen einem oberen Führungsabschnitt des Drehnockens 5, welcher ein Stück in den Steuerkranz 8 der Drucktaste 7 hineinragt, und der Hüllenverzahnung 4 positioniert (siehe die Schnittdarstellung in Figur 4). In Figur 6 ist zusätzlich die dem Drehnocken 5 zugewandte Unterseite der Drucktaste 7 gezeigt. Es ist hier der Steuerkranz 8 an einem zylinderförmigen Vorsprung der Drucktaste 7 zu sehen.

Wenn der Steuerkranz 8 der Drucktaste 7 in den Rastkranz 6 des Drehnockens 5 eingreift, wird der Drehnocken 5 in axialer Richtung nach unten verschoben und gleichzeitig gedreht. Damit rastet der Rastkranz 6 des Drehnockens 5 beispielsweise in einen der Rastzacken 32 des Führungsgehäuses 3 ein. Die Abwärtsbewegung und Drehbewegung des Drehnockens 5 wird mit der Feder 17 auf den Raststift 9 übertragen, der in eine der Rastaussparungen 16 der Basis 15 einrastet. Wird durch eine weitere Betätigung der Drucktaste 7 der Drehnocken 5 weitergedreht und die Rastzacken 6 in eine der Nuten 32 des Führungsgehäuses 3 geschoben, so wird der Drehnocken 5 durch die Federkraft der ersten Feder 13 angehoben und mit ihm der Raststift 9 in Aufwärtsrichtung, also in Richtung der Drucktaste 7, verschoben, so dass der Formschluss des Raststifts 9 mit den Rastaussparungen 16 aufgehoben wird und das Gehäuse 2 um seine Zentralachse drehbar ist.

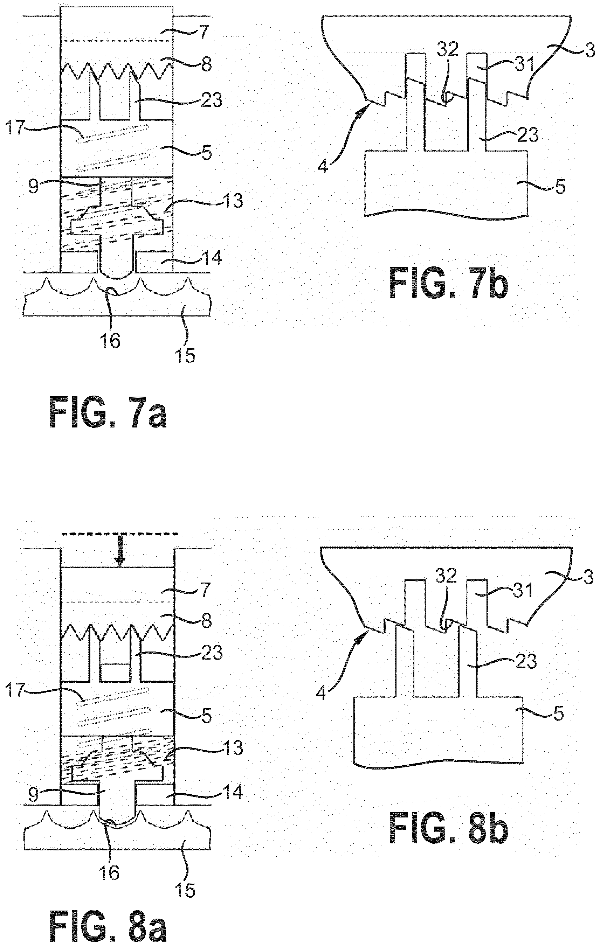

Die Figuren 7a bis 10b veranschaulichen die Funktion der verschiedenen Elemente, insbesondere Rastelemente bei der Arretierung bzw. bei dem Zurückfahren in die Freigabestellung der Ablageeinrichtung 1 noch einmal. Die mit der gleichen Nummer bezeichneten Figuren zeigen dabei jeweils die gleiche Stellung der verschiedenen Elemente, wobei die jeweils links angeordnete Figur (mit der Ergänzung a) zur Erläuterung der Wechselwirkung der Raststege 23 des Drehnockens 5 mit dem Steuerkranz der Drucktaste 7 dient und die jeweils rechts angeordnet Figur (mit der Ergänzung b) zur Erläuterung der Wechselwirkung der Raststege 23 des Drehnockens 5 mit den Nuten 31 bzw. Rastzacken 32 der Kulisse 4 dient. In den Figuren auf der linken Seite sind jeweils auch die erste Feder 13 und die zweite Feder 17 schematisch dargestellt. Dabei ist gut zu erkennen, dass die zweite Feder 17 einen kleineren Durchmesser aufweist als die erste Feder 13 und abschnittsweise koaxial innerhalb dieser Feder 13 gelagert ist.

In den Figuren 7a und 7b ist die Freigabestellung bzw. Grundstellung gezeigt. In dieser Grundstellung ist die Drucktaste 7 nicht nach unten gedrückt. Die Raststege 23 des Drehnockens 5 sind in die Nuten 31 des Führungsgehäuses 3 eingerastet. Der Raststift 9 ist daher nicht in die Rastaussparungen 16 eingerastet. Somit lässt sich der Träger 2 um die Drehachse D (siehe Figur 4) drehen.

In den Figuren 8a und 8b wird gerade die Drucktaste 7 betätigt, d. h. nach unten gedrückt, und der Drehnocken 5 wird in Abwärtsrichtung verschoben und dabei gleichzeitig aufgrund der Zacken des Steuerkranzes 8 der Drucktaste 7 um seine Längsachse gedreht (in den Figuren nach links verschoben). Damit wird auch der Raststift 9 in eine der Rastaussparungen 16 gedrückt. Die erste Feder 13 wird hierbei zusammengedrückt.

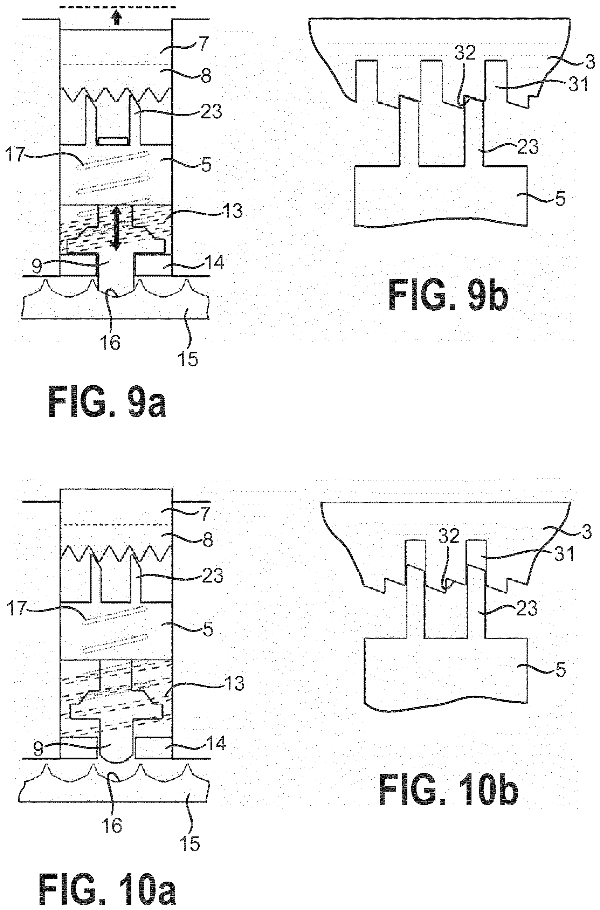

In den Figuren 9a und 9b sind die Raststege 23 des Drehnockens 5 schließlich in die Rastzacken 32 der Kulisse 4 des Führungsgehäuses 3 eingerastet. Dies entspricht der eigentlichen Raststellung, d. h. dem fest eingerasteten arretierten Zustand der Ablageeinrichtung 1. Nun ist die Ablageeinrichtung 1 gegen eine Drehung des Trägers 2 um die Zentralachse arretiert. Im Vergleich zu dem Zustand der Figuren 8a und 8b ist der Drehnocken 5 leicht in Aufwärtsrichtung verschoben. Der Raststift ruht jedoch weiterhin in einer Rastaussparung 16. Er wird durch die Federkraft der zweiten Feder 17 in der Rastaussparung 16 gehalten. Außerdem ist der Drehnocken 5 aufgrund der schrägen Form der Rastzacken 32 der Kulisse 4 wieder ein Stück gedreht (in den Figuren nach links verschoben) worden, so dass die Spitze der Raststege 23 des Drehnockens 5 bezogen auf den Steuerkranz 8 der Drucktaste 7 über die Spitze der nächsten Rastzacke hinweg weiter verschoben sind.

Wird nun ausgehend von Figur 9a die Drucktaste 7 weiter nach unten gedrückt, kann zwar der Raststift 9 nicht weiter nach unten verschoben werden, da dieser sich ja bereits in der unteren Endstellung befindet (die Bewegung des Raststifts 9 ist bei diesem Ausführungsbeispiel zum einen durch die Tiefe der Rastpfannen 16 und zum anderen durch den ringförmigen Vorsprung 12 am Raststift 9, welcher gegen die Gegenlagerscheibe 14 drückt, nach unten begrenzt). Da jedoch der Drehnocken 5 gegenüber dem Raststift 9 beweglich gelagert ist, kann der Drehnocken 5 gegen die Federkraft der zweiten Feder 17 noch etwas nach unten verschoben werden. Dabei wirken die nächsten Rastzacken des Steuerkranzes 8 der Drucktaste 7 wieder mit den Schrägen der Raststege 23 des Drehnockens 5 zusammen und verschieben diesen gleichzeitig ein weiteres Stück in der Drehrichtung, so dass die Raststege 23 nun mit den Rastzacken 32 der Kulisse 4 in Eingriff kommen, die schräg in die Nuten 31 der Kulisse 4 münden. Wird die Drucktaste 7 wieder losgelassen, wird sie gemeinsam mit dem Drehnocken 5 durch die Kraft der zweiten Feder 17 wieder nach oben gedrückt, so dass die Raststege 23 des Drehnockens zurück in die Nuten 31 der Kulisse 4 rutschen.

In den Figuren 10a und 10b ist dieser Ausgangszustand gezeigt. Die Raststege 23 sind nun wieder in die Nuten des Führungsgehäuses 3 eingerastet, allerdings hat sich der Drehnocken 5 im Vergleich zu der Figur 7 um eine Nut 31 weitergedreht. Der Raststift 9 ist nun wieder in der Freigabestellung, also nicht mehr in einer der Rastaussparungen 16 eingerastet, so dass sich das Gehäuse 2 um seine Zentralachse drehen lässt.

Die meisten Komponenten der erfindungsgemäßen Ablageeinrichtung 1 lassen sich kostengünstig im Spritzgussverfahren herstellen, dies gilt insbesondere für das Gehäuse des Trägers 2, die Ablage bzw. Abdeckung 21, das Basiselement 15, die Gegenlagerscheibe 14, die Drucktaste 7, den Raststift 9 und den Drehnocken 5.

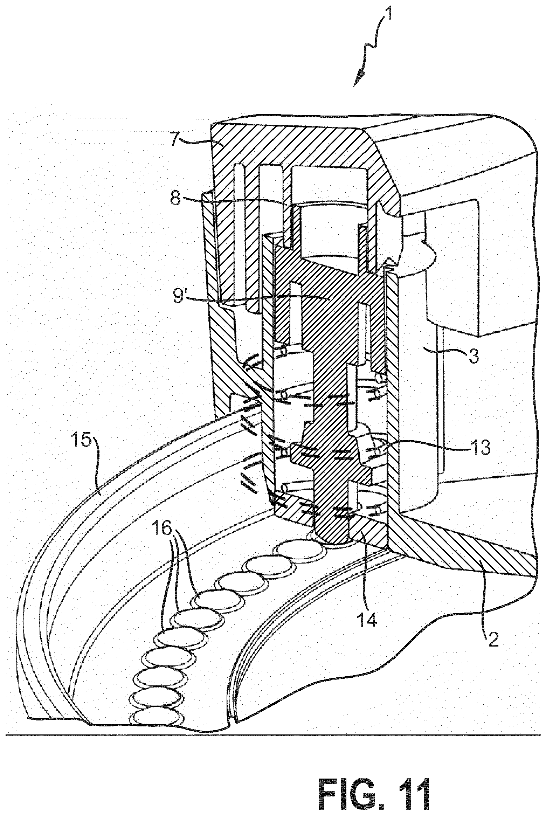

Figur 11 zeigt eine Ablageeinrichtung 1 gemäß einer zweiten Ausführungsform. In diesem Fall ist die Arretiereinrichtung 30 derart ausgestaltet, dass der Raststift und der Drehnocken zu einem Arretierelement 9' miteinander fest verbunden sind. Beispielsweise ist dieses Arretierelement 9' einstückig ausgebildet, z. B. aus Kunststoff im Spritzgussverfahren hergestellt. Ein weiterer Unterschied der Ablageeinrichtung gemäß dem zweiten Ausführungsbeispiel im Vergleich zu der Ablageeinrichtung gemäß dem ersten Ausführungsbeispiel besteht in der Verwendung nur einer Feder 13, d. h., es ist keine zweite Feder 17 montiert. Diese ist auch nicht nötig, da die Übertragung der Bewegung des Drehnockens 5 auf den Raststift 9 nun direkt realisiert ist und somit ein zusätzliches Kraftübertragungselement nicht nötig ist. Dementsprechend muss der Raststift bzw. das Arretierelement 9' hier auch keinen ringförmigen Vorsprung als Federsitz für eine zweite Feder aufweisen. Bei dieser Variante ist eine Relativbewegung des Raststifts 9 zu dem Drehnocken 5 in Axialrichtung nicht möglich, da diese ja gemeinsam ein Teil sind oder fest miteinander verbunden sind. Dies führt dazu, dass bei der Betätigung der Drucktaste 7 das Arretierelement 9' weiter in Abwärtsrichtung, d. h. in Richtung der Basiseinheit 15, bewegt wird als der Raststift 9 bei der Anordnung gemäß dem ersten Ausführungsbeispiel. Entsprechend sind also bei der Anordnung gemäß dem zweiten Ausführungsbeispiel in Axialrichtung ausreichend tiefe Rastaussparungen 16 notwendig. Dafür ist die Anordnung einfacher und kostengünstiger realisierbar als die Anordnung gemäß dem ersten Ausführungsbeispiel. Die übrigen Bauelemente sind beispielsweise analog zu der Anordnung in den Figuren 1 bis 10 ausgebildet.

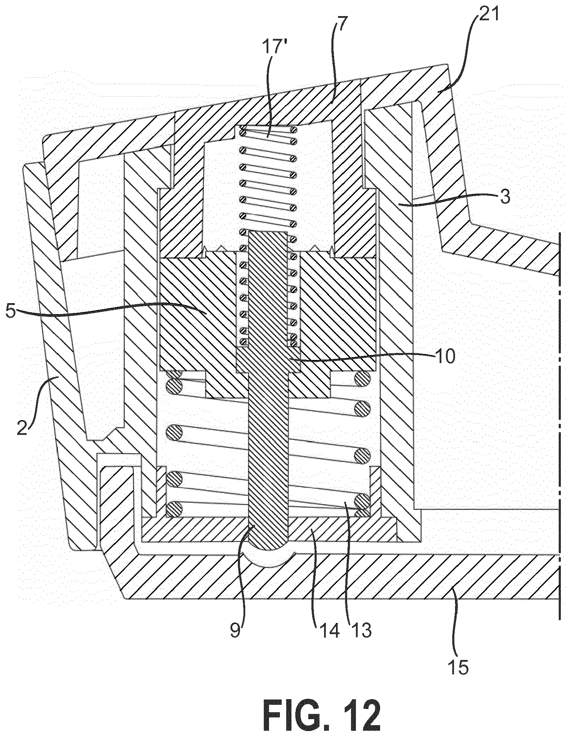

In Figur 12 ist eine Ablageeinrichtung gemäß einem dritten Ausführungsbeispiel gezeigt. Bei dem dritten Ausführungsbeispiel ist die Arretiereinrichtung 30 alternativ derart gestaltet, dass die zweite Feder 17' nicht wie bei dem ersten Ausführungsbeispiel zwischen einer in Abwärtsrichtung offenen kreisförmigen Nut 33 des Drehnockens 5 und einem an dem zu dem Basiselement 15 zugewandten Ende des Raststifts 9 ausgebildeten Federsitz angeordnet ist. In dem dritten Ausführungsbeispiel ist das zweite Federelement 17' zwischen einer Ausnehmung der Drucktaste 7 und Vorsprüngen 10 des Raststifts 9 in axialer Richtung angeordnet. Ähnlich wie bei dem ersten Ausführungsbeispiel kann sich der Drehnocken 5 relativ zu dem Raststift 9 in axialer Richtung bewegen. Im Unterschied zu der ersten Variante wird hier aber die Drucktaste 7 unabhängig davon, in welcher Stellung sich der Raststift 9 befindet, immer nach oben gedrückt. D. h. es ist hier an der Stellung der Drucktaste 7 nicht erkennbar, ob der Träger 2 gegenüber dem Basiselement 15 bezüglich einer Drehung um die Drehachse D arretiert ist oder nicht. Auch hier können die übrigen Bauelemente beispielsweise analog zu der Anordnung in den Figur 1 bis 10 ausgebildet sein.

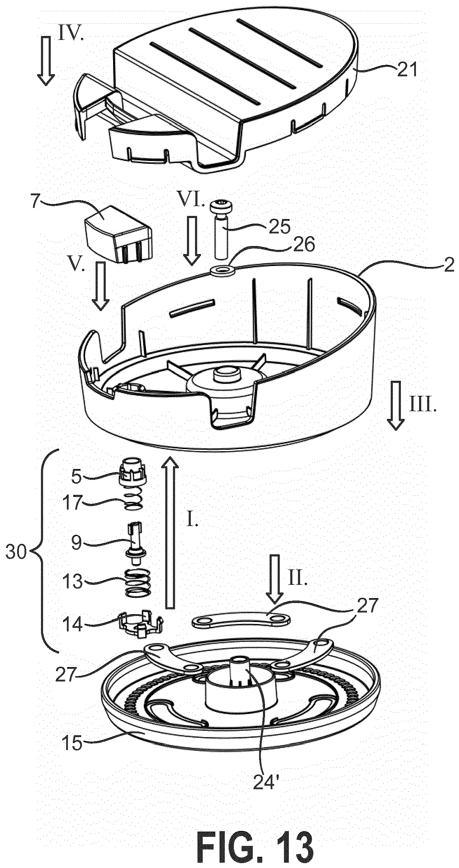

Figur 13 zeigt eine Explosionsansicht einer weiteren Variante der erfindungsgemäßen Ablageeinrichtung (ähnlich der Darstellung in Figur 3), welche sich von der in Figur 3 gezeigten Ausführungsform dadurch unterscheidet, dass hier in ein Lagerelement 24' in der Basiseinheit 15 von oben, d. h. zunächst einen Dom auf der Drehachse D des Trägers 2 durchdringend, eine Schraube 25 eingeschraubt wird, die als Drehachse für den Träger 2 dient. Das Lagerelement 24' kann hierzu zum Beispiel auch als Dom mit einem Innengewinde ausgebildet sein, in das die Schraube 25 mit einer Unterlegscheibe 26 eingeschraubt wird. Der Träger 2 ist durch die Schraube 25 in Axialrichtung arretiert, kann sich aber um die Schraube 26 als Drehachse D drehen. Außerdem werden zusätzlich zwischen dem Träger 2 und der Basiseinheit 15 optionale Gleitsegmente 27 angeordnet, die eine besonders reibungsarme Rotation des Trägers 2 relativ zu der Basiseinheit 15 gewährleisten. Wie in Figur 3 sind auch in Figur 13 zusätzlich zu den Bezugszeichen römische Ziffern I. bis VI. eingefügt, die die Reihenfolge der Montageschritte angeben. Hieran ist zu sehen, dass bei diesem Ausführungsbeispiel, bei dem die drehbare Verankerung des Trägers 2 an der Basiseinheit 15 mittels der Schraube 25 von oben erfolgt, ganz zum Schluss die Ablage 21 im Träger 2 eingesetzt und beispielsweise mittels Rastung verklemmt wird. Bei dieser Variante können ebenfalls die übrigen Bauelemente beispielsweise analog zu der Anordnung in den Figur 1 bis 10 ausgebildet sein.

Es wird abschließend noch einmal darauf hingewiesen, dass es sich bei den vorhergehend detailliert beschriebenen Vorrichtungen lediglich um Ausführungsbeispiele handelt, welche vom Fachmann in verschiedenster Weise modifiziert werden können, ohne den Bereich der Erfindung zu verlassen. Insbesondere können die oben beschriebenen besonderen Merkmale der Varianten gegebenenfalls auch miteinander kombiniert werden. Beispielsweise kann eine Ausbildung der Arretiereinrichtung 30 wie in dem zweiten oder dritten Ausführungsbeispiel erfolgen, aber eine Verbindung des Trägers 2 mit dem Basiselement 15 gemäß der letzten Ausführungsvariante. Weiterhin schließt die Verwendung der unbestimmten Artikel "ein" bzw. "eine" nicht aus, dass die betreffenden Merkmale auch mehrfach vorhanden sein können. Ebenso schließen die Begriffe "Einheit" und "Element" nicht aus, dass die betreffenden Komponenten aus mehreren zusammenwirkenden Teil-Komponenten bestehen, die gegebenenfalls auch räumlich verteilt sein können.

### Bezugszeichenliste

- 1: Ablageeinrichtung
- 2: Träger, Gehäuse
- 3: Führung, Führungsgehäuse
- 4: Kulisse, Hüllenverzahnung
- 5: Arretierelement, Drehnocken
- 6: Rastkranz
- 7: Betätigungselement, Drucktaste
- 8: Steuerkranz
- 9, 9': Arretierelement, Raststift
- 10: Vorsprünge
- 11: Nuten
- 12: ringförmiger Vorsprung, Federsitz
- 13: erste Feder
- 14: Gegenlagerscheibescheibe, Führungsdeckel, Haltescheibe
- 15: Basiseinheit
- 16: Rastaussparungen, Rastpfannen
- 17, 17': zweite Feder
- 18: Stopfen
- 20: Ausnehmung
- 21: Ablage
- 22: Profil
- 23: Raststege
- 24, 24': zentrales Lagerelement
- 25: Schraube
- 26: Unterlegscheibe
- 27: Gleitsegmente, Gleitelemente
- 29: Fußelemente
- 30: Arretiereinrichtung
- 31: Nuten
- 32: Rastzacken
- 33: kreisförmige Nut
- D: Drehachse

## Patentansprüche

1. Ablageeinrichtung (1) für einen Gegenstand, insbesondere für einen Tablet-Computer, aufweisend:
- eine Basiseinheit (15) mit einer Abstellfläche,
- einen an der Basiseinheit (15) um eine quer, vorzugsweise im Wesentlichen senkrecht, zur Abstellfläche der Basiseinheit verlaufende Drehachse (D) drehbar gelagerten Träger (2) mit zumindest einer Ablage (21) zum Ablegen des Gegenstands,
- eine Arretiereinrichtung (30) mit einem Arretierelement (5, 9) zum Arretieren des Trägers an der Basiseinheit (15) in zumindest einer, vorzugsweise mehreren, Drehstellungen,
- und ein Betätigungselement (7) zum Betätigen des Arretierelements (5,9), **dadurch gekennzeichnet, dass** das Arretierelement in einen Einrastzustand versetzt wird.

2. Ablageeinrichtung (1) nach Anspruch 1, **dadurch gekennzeichnet, dass** das Betätigungselement (7) eine Drucktaste (7) umfasst und dass die Arretiereinrichtung (30) vorzugsweise so ausgebildet ist, dass das Arretierelement (5, 9), wenn es sich in einer Freigabestellung befindet, bei einer Betätigung der Drucktaste (8) in eine Arretierstellung gebracht wird, und dass das Arretierelement (5, 9), wenn es sich in einer Arretierstellung befindet, bei einer Betätigung der Drucktaste (7) in eine Freigabestellung gebracht wird.

3. Ablageeinrichtung (1) nach einem der vorhergehenden Ansprüche, **dadurch gekennzeichnet, dass** die Basiseinheit (15) eine Mehrzahl von Rastaussparungen (16) aufweist, die entlang eines Umfangs um die Drehachse (D) angeordnet sind.

4. Ablageeinrichtung (1) nach einem der vorhergehenden Ansprüche, **dadurch gekennzeichnet, dass** das Arretierelement (5, 9) in einer Führung (3), vorzugsweise federnd, verschiebbar gelagert ist.

5. Ablageeinrichtung (1) nach Anspruch 4, **dadurch gekennzeichnet, dass** die Führung (3) eine ringförmig um das Arretierelement (5, 9) umlaufende Kulisse (4) aufweist.

6. Ablageeinrichtung (1) nach Anspruch 5, **dadurch gekennzeichnet, dass** das Arretierelement (5, 9) einen ringförmigen Rastkranz (6) aufweist, welcher im Eingriff mit der Kulisse (4) der Führung (3) steht.

7. Ablageeinrichtung (1) nach Anspruch 6, **dadurch gekennzeichnet, dass** der Rastkranz (6) eine Mehrzahl von Raststegen (23) aufweist, welche an ihrer der Drucktaste (7) zugewandten Stirnseite in Umfangsrichtung abgeschrägt sind und welche in einer Freigabestellung des Arretierelements (5, 9) in Nuten (31) der Kulisse (4) eingreifen.

8. Ablageeinrichtung (1) nach Anspruch 6 oder 7, **dadurch gekennzeichnet, dass** die Drucktaste (7) an einer zum Arretierelement (5, 9) weisenden Seite einen ringförmig umlaufenden Steuerkranz (8) aufweist, welcher mit dem Rastkranz des Arretierelements (5, 9) derart im Eingriff steht, dass bei einer Betätigung der Drucktaste (7) das Arretierelement (5, 9) entlang einer Längsachse des Arretierelements (5, 9) verschoben und um die Längsachse gedreht wird.

9. Ablageeinrichtung (1) nach Anspruch 7 oder 8, **dadurch gekennzeichnet, dass** die Raststege (23) in einer Radialrichtung derart dimensioniert sind, dass sie sowohl mit dem Steuerkranz (8) der Drucktaste (7) als auch der Kulisse (4) im Eingriff stehen.

10. Ablageeinrichtung (1) nach einem der Ansprüche 1 bis 9, aufweisend eine Gegenlagerscheibe (14) am einem der Drucktaste (7) gegenüberliegenden Ende der Führung (3), an dem das Arretierelement (5, 9) gegengelagert ist.

11. Ablageeinrichtung (1) nach einem der Ansprüche 6 bis 9, **dadurch gekennzeichnet, dass** das Arretierelement (5, 9, 9') einen Raststift (9, 9') umfasst, und vorzugsweise
- der Rastkranz (6) an dem Raststift angeordnet ist
oder
- der Rastkranz (6) an einem Drehnocken (5) des Arretierelements (5, 9) angeordnet ist und der Raststift beweglich am oder im Drehnocken (5) gelagert ist.

12. Ablageeinrichtung (1) nach einem der Ansprüche 1 bis 11, **dadurch gekennzeichnet, dass** ein erstes Federelement (13) derart angeordnet ist, dass es auf das Arretierelement (5, 9, 9') eine Axialkraft ausübt, die der durch die Drucktaste (7) ausgeübten Axialkraft entgegengesetzt wirkt.

13. Ablageeinrichtung (1) nach einem der Ansprüche 3 bis 12, **dadurch gekennzeichnet, dass** die Rastaussparungen (16) so ausgebildet sind und die Arretiereinrichtung (30) so angeordnet und ausgebildet ist, dass das Arretierelement (5, 9, 9') von der Arretierstellung aus in einer von der Drucktaste (7) weg weisenden Richtung in eine Zwischenstellung verfahrbar ist.

14. Ablageeinrichtung (1) nach einem der Ansprüche 11 bis 13, aufweisend ein zweites Federelement (17, 17'), dessen eines Ende in Kontakt mit dem Raststift (9) steht und dessen anderes Ende in Kontakt mit dem Drehnocken (5) steht, derart, dass über das zweite Federelement (17, 17') bei einer Bewegung des Drehnockens (5) durch die Drucktaste (7) eine Kraft auf den Raststift (9) in Bewegungsrichtung des Drehnockens (5) ausgeübt wird.

15. Ablageeinrichtung (1) nach Anspruch 14, **dadurch gekennzeichnet, dass** die Federkonstante des ersten Federelements (13) größer als die Federkonstante des zweiten Federelements (17) ist.

## Claims

1. Repository device (1) for an object, in particular a tablet computer, comprising:
- a base unit (15) and a deposit surface,
- a support (2) which is borne on the base unit (15) in a rotational manner about an axis of rotation (D) running at right angles, preferably essentially vertically, to deposit surface of the base unit and has at least one rest (21) for putting down the object
- a stop device (30) with a stop element (5, 9) for stopping the support on the base unit (15) in at least one, preferably several, rotational positions
- and an actuating element (7) for actuating the stop element (5, 9) **characterised in that** the stop element is moved into a snapped-in state.

2. Repository device (1) according to claim 1 **characterised in that** the actuating element (7) comprises a push button (7) and that the stop device (30) is preferably designed in such a way that on operation of the push button (8) the stop element (5, 9), when it is in a release position, is brought into a stopping position and **in that** on an operation of the push button (7) the stop element (5, 9), when it is in an stopping position, is brought into a release position.

3. Repository device (1) according to any one of the preceding claims **characterised in that** the base unit (15) comprises a plurality of snap-in recesses (16) which are arranged along a circumference around the axis of rotation (D).

4. Repository device (1) according to any one of the preceding claims **characterised in that** the stop device (5, 9) **characterised in that** the stop element (5, 9) is borne in a displaceable manner in a guide (3), preferably in a spring-loaded manner.

5. Repository device (1) according to claim 4 **characterised in that** the guide (3) has a slot (4) annularly surrounding the stop element (5, 9).

6. Repository device (1) according to claim 5 **characterised in that** the stop element (5, 9) comprises an annular detent ring (6) which engages with the slot (4) of the guide (3).

7. Repository device (1) according to claim 6 **characterised in that** that the detent ring (6) comprises a plurality of detent webs (23) which on their front side facing the push button (7) are chamfered in the circumferential direction and which when the stop element (5, 9) in a release position engage in grooves (31) of the slot (4).

8. Repository device (1) according to claim 6 or 7 **characterised in that** on a side facing the stop element (5, 9) the push button (7) has an annularly surrounding control ring (8) which engages with the detent ring of the stop element (5, 9) in such a way that when the push button (7) is operated the stop element (5, 9) is displaced along a longitudinal axis of the stop element (5, 9) and turned about the longitudinal axis.

9. Repository device (1) according to claim 7 or 8 **characterised in that** the detent webs (23) are dimensioned in a radial direction in such a way that they engage with both the control ring (8) of the push button (7) and also the slot (4).

10. Repository device (1) according to any of claims 1 to 9 comprising a counter bearing disk (14) at an end of the guide (3) opposite the push button (7) on which the stop element (5, 9) abuts.

11. Repository device (1) according to any of claims 6 to 9 **characterised in that** the stop element (5, 9, 9') comprises a detent pin (9, 9') and preferably
- the detent ring (6) is arranged on the detent pin or
- the detent ring (6) is arranged on rotary cam (5) of the stop element (5, 9) and the detent pin is moveable borne on or in the rotary cam (5).

12. Repository device (1) according to any of claims 1 to 11 **characterised in that** a first spring element (13) is arranged in such a way that it exerts an axial force on the stop element (5, 9, 9') which acts contrary to the axial force exerted by the push button (7) .

13. Repository device (1) according to any of claims 3 to 12 **characterised in that** that snap-in recesses (16) are designed in such a way and the stop device (30) arranged and designed in such a way that the stop element (5, 9, 9') can be displaced from the stop position in a direction pointing away from the push button (7) into an intermediate position.

14. Repository device (1) according to any of claims 11 to 13 comprising a second spring element (17, 17'), one end of which is in contact with the detent pin (9) and the other end of which is in contact with the rotary cam (5) so that via the second spring element (17, 17') during a movement of the rotary cam (5) through the push button (7) a force is exerted on the detent pin (9) in the direction of movement of the rotary cam (5) .

15. Repository device (1) according to claim 14 **characterised in that** the spring constant of the first spring element (13) is greater than the spring constant of the second spring element (17)

## Revendications

1. Réceptacle (1) pour un objet, notamment pour une tablette informatique, comportant :
- une unité de base (15) munie d'une surface de dépose,
- un support (2) logé en rotation sur une unité de base (15) autour d'un axe de rotation (D) s'écoulant à la transversale, de préférence sensiblement à la perpendiculaire, de la surface de dépose de l'unité de base, doté d'au moins dispositif de dépose (21) pour déposer l'objet,
- un système de blocage (30) doté d'un élément de blocage (5, 9), destiné à bloquer le support sur l'unité de base (15) dans au moins une, de préférence plusieurs, positions en rotation,
- et un élément d'actionnement (7), destiné à actionner l'élément de blocage (5, 9), **caractérisé en ce qu'**on amène l'élément de blocage dans une position d'enclenchement.

2. Réceptacle (1) selon la revendication 1, **caractérisé en ce que** l'élément d'actionnement (7) comprend un bouton-poussoir (7) et **en ce que** le système de blocage (30) est conçu de préférence de telle sorte que lorsqu'il se trouve dans une position de libération, lors d'un actionnement du bouton-poussoir (8), l'élément de blocage (5, 9) soit amené dans une position de blocage et **en ce que** lorsqu'il se trouve dans une position de blocage, l'élément de blocage (5, 9), soit amené dans une position de libération, lors d'un actionnement du bouton-poussoir (7).

3. Réceptacle (1) selon l'une quelconque des revendications précédentes, **caractérisé en ce que** l'unité de base (15) comporte une pluralité d'encoches d'enclenchement (16) qui sont placées le long d'une périphérie, autour de l'axe de rotation (D).

4. Réceptacle (1) selon l'une quelconque des revendications précédentes, **caractérisé en ce que** l'élément de blocage (5, 9) est logé dans un guidage (3), de préférence en étant élastiquement déplaçable.

5. Réceptacle (1) selon la revendication 4, **caractérisé en ce que** le guidage (3) comporte une coulisse (4) s'étendant sous forme annulaire autour de l'élément de blocage (5, 9).

6. Réceptacle (1) selon la revendication 5, **caractérisé en ce que** l'élément de blocage (5, 9) comporte une couronne d'enclenchement (6) de forme annulaire, qui est en engagement avec la coulisse (4) du guidage (3).

7. Réceptacle (1) selon la revendication 6, **caractérisé en ce que** la couronne d'enclenchement (6) comporte une pluralité de barrettes d'enclenchement (23), qui sur leur face frontale dirigée vers le bouton-poussoir (7) sont biseautées dans la direction périphérique et qui dans une position de libération de l'élément de blocage (5, 9) s'engagent dans des rainures (31) de la coulisse (4).

8. Réceptacle (1) selon la revendication 6 ou 7, **caractérisé en ce que** sur une face dirigée vers l'élément de blocage (5, 9) le bouton-poussoir (7) comporte une couronne de commande (8) périphérique en forme d'anneau, laquelle est en engagement avec la couronne d'enclenchement de l'élément de blocage (5, 9), de telle sorte que lors d'un actionnement du bouton-poussoir (7), l'élément de blocage (5, 9) soit déplacé le long d'un axe longitudinal de l'élément de blocage (5, 9) et tourne autour de l'axe longitudinal

9. Réceptacle (1) selon la revendication 7 ou 8, **caractérisé en ce que** dans une direction radiale, les barrettes d'enclenchement (23) sont dimensionnées de telle sorte qu'elles soient en engagement aussi bien avec la couronne de commande (8) du bouton-poussoir (7) qu'également avec la coulisse (4).

10. Réceptacle (1) selon l'une quelconque des revendications 1 à 9, comportant sur l'extrémité du guidage (3) qui est opposée au bouton-poussoir (7) un disque de support antagoniste (14), sur lequel l'élément de blocage (5, 9) est contre logé.

11. Réceptacle (1) selon l'une quelconque des revendications 6 à 9, **caractérisé en ce que** l'élément de blocage (5, 9, 9') comprend une goupille d'enclenchement (9, 9') et de préférence
- la couronne d'enclenchement (6) est placée sur la goupille d'enclenchement
ou
- la couronne d'enclenchement (6) est placée sur une came rotative (5) de l'élément de blocage (5, 9) et la goupille d'enclenchement est logée de manière mobile sur ou dans la came rotative (5).

12. Réceptacle (1) selon l'une quelconque des revendications 1 à 11, **caractérisé en ce qu'**un premier élément à ressort (13) est placé de sorte à exercer sur l'élément de blocage (5, 9, 9') une force axiale, qui agit à l'opposée de la force axiale exercée sur le bouton-poussoir (7).

13. Réceptacle (1) selon l'une quelconque des revendications 3 à 12, **caractérisé en ce que** les encoches d'enclenchement (16) sont conçues et le système de blocage (30) est placé de sorte que l'élément de blocage (5, 9, 9') soit déplaçable de la position de blocage dans une direction s'éloignant du bouton-poussoir (7), dans une position intermédiaire.

14. Réceptacle (1) selon l'une quelconque des revendications 11 à 13, comportant un deuxième élément à ressort (17, 17'), dont l'une des extrémités est en contact avec la goupille d'enclenchement (9) et dont l'autre extrémité est en contact avec la came rotative (5) de telle sorte que par l'intermédiaire du deuxième élément à ressort (17, 17'), lors du déplacement de la came rotative (5) par le bouton-poussoir (7), une force soit exercée sur la goupille d'enclenchement (9) dans la direction de déplacement de la came rotative (5) .

15. Réceptacle (1) selon l'une quelconque des revendications 1 à 14, **caractérisé en ce que** la constante de ressort du premier élément à ressort (13) est supérieure à la constante de ressort du deuxième élément à ressort (17).
